# EUROPÄISCHE PATENTSCHRIFT

(11) **EP 2 499 105 B1**
(45) Veröffentlichungstag und Bekanntmachung des Hinweises auf die Patenterteilung: **23.08.2017**
(21) Anmeldenummer: 10776735.2
(22) Anmeldetag: 15.11.2010
(51) Int. Cl.: C04B 35/593, C04B 35/626

(54) **GEDOPTE ALPHA-BETA-SIALONKERAMIKEN**
ALPHA-BETA BASED SIALON CERAMICS
CERAMIQUES A BASE DE ALPHA-BETA SIALON

(30) Priorität: 13.11.2009 DE 102009046690
(43) Veröffentlichungstag der Anmeldung: 19.09.2012
(73) Patentinhaber: CeramTec GmbH, 73207 Plochingen (DE)
(72) Erfinder: BITTERLICH, Bernd, 73262 Reichenbach/Fils (DE); FRIEDERICH, Kilian, 73207 Plochingen (DE); MANDAL, Hasan, 26 000 Eskisehir (TR); KARA, Alpagut, 26 000 Eskisehir (TR); KARA, Ferhat, 26 000 Eskisehir (TR); TURAN, Servet, 26 000 Eskisehir (TR)
(74) Vertreter: Scherzberg, Andreas Hans
(86) Internationale Anmeldenummer: PCT/EP2010/067496
(87) Internationale Veröffentlichungsnummer: WO 2011/058176

(56) Entgegenhaltungen:
- WO-A1-2005/016847
- DE-A1-102004 035 364
- GB-A- 2 243 364
- US-A- 4 711 644
- US-A- 5 200 374
- US-A- 5 227 346

## Beschreibung

Die Erfindung betrifft einen α- und β-SiAlON-Verbundstoff, der eine α-SiAlON-, eine β-SiAlON-, eine intergranuläre amorphe und/oder kristalline Phase und einen Hartstoff umfasst. Die intergranuläre amorphe und/oder kristalline Phase wird hergestellt aus einem Multikation-Gemisch, das neben den Elementen Si, Al, O und N das Element Calcium, mindestens ein Element aus Yttrium und/oder Seltenen Erden mit einer Atomzahl größer 62 und mindestens ein Seltenerd-Element mit einer Atomzahl gleich oder kleiner 62 enthält.

Siliziumnitrid- und SiAlON-Keramiken sind technische Keramikwerkstoffe, die sich durch eine hervorragende Kombination von Körpereigenschaften wie Steifigkeit, Festigkeit, Härte und Zähigkeit auszeichnen, die theoretisch auch bei sehr hohen Temperaturen (>1000°C) erhalten bleiben.

Die SiAlONe beruhen auf Zusammensetzungen der Elemente Si, Al, O, N, woraus sich auch das Akronym ableitet. Das kommerziell erfolgreichste SiAlON (β-SiAlON) weist eine β-Si₃N₄-Kristallstruktur auf, in der einige Siliziumatome durch Aluminiumatome und die gleiche Anzahl Stickstoffatome durch Sauerstoffatome ersetzt sind, so dass ein Si_{6-z}Al_{z}O_{z}N_{8-z} entsteht, in dem 0<z<4,2 ist. Eine weitere übliche SiAlON-Phase ist α-SiAlON mit der allgemeinen Zusammensetzung MₓSi₁₂₋ₘ₋ₙAlₘ₊ₙOₙN₁₆₋ₙ, in der m für die Zahl der Si-N-Bindungen steht, die in der Einheitszelle durch Al-N ersetzt sind, und n für die Zahl der Si-N-Bindungen, die durch Al-O in der Einheitszelle ersetzt sind, und 0<x<2 ist und M für ein Kation wie Li, Mg, Ca, Y und Seltenerd-Element (ausschließlich La, Ce) steht.

β-SiAlON ist eine feste technische Keramik von guter Oxidationsbeständigkeit und Kriechfestigkeit bis zu 1300°C. α-SiAlON hat eine hohe Härte aber eine etwas schlechtere Festigkeit, Zähigkeit und Oxidationsbeständigkeit als β-SiAlON. Durch Wahl einer besonderen Phase kann man recht genau eine optimale Kombination von Körpereigenschaften definieren. Durch geeignete Kombinationen von α-β-SiAlONen lassen sich optimierte Verbundwerkstoffe herstellen.

SiAlONe werden gewöhnlich hergestellt durch Mischen von Si₃N₄-, Al₂O₃-, AlN-Pulvern mit einem oder mehreren Metalloxiden (oft mit Y₂O₃), Kompaktieren der Pulver auf die gewünschte Form und dann Brennen der Komponenten bei 1750°C für einige Stunden. Die Funktion des Metalloxids ist die Umsetzung mit dem Siliziumoxid, das immer auf der Oberfläche jedes Siliziumnitridteilchens anwesend ist, so dass eine flüssige Phase erhalten wird, die die Verdichtung unterstützt. Nach dem Sintern kühlt die flüssige Phase, die auch Stickstoff enthält, ab und bildet eine amorphe Phase zwischen den SiAlON-Körnern. Bei der anschließenden Verwendung dieser Werkstoffe beginnt die amorphe Phase bei Temperaturen leicht über ihrer Glasübergangstemperatur (Tg) zu erweichen, und die mechanischen Eigenschaften verschlechtern sich rasch. Selbst bei den feuerfestesten Oxid-Additiven liegt der Tg kaum über 1000°C.

Im Stand der Technik wird die Bereitstellung von hochtemperaturfesten keramischen SiAlON-Zusammensetzungen vorgeschlagen, die aus einer Kombination von α-SiAlON, β-SiAlON und intergranulären Phasen bestehen.

Die US-Patente 4 563 433 und 4 711 644 offenbaren eine Keramik, die α-SiAlON, β-SiAlON und eine intergranuläre Phase enthält. Die α-SiAlON-Phase wird hergestellt durch Verwendung von Yttrium und/oder anderen Seltenerd-Elementen.

Das US-Patent 5 200 374 offenbart eine Keramik mit α-SiAlON, β-SiAlON und einer intergranulären Phase. Die α-SiAlON-Phase wird hergestellt durch Verwendung von Seltenerd-Elementen aus der Gruppe Ho, Er, Tm, Yb und Lu.

Die US-Patente 5 227 346 und 5 413 972 offenbaren eine Keramik mit α-SiAlON-, β-SiAlON- und intergranulärer Phase. Dieser SiAlON-Werkstoff wird hergestellt durch die Verwendung einer Verbindung aus der Gruppe der Oxide und Nitride von Sr, mindestens einem Element von Ca, Mg, Li, oder Na und mindestens einem Element von Yttrium oder Seltenerd-Elementen.

Die erwähnten Veröffentlichungen verwenden Yttrium und/oder Seltenerd-Kationen, ausgenommen die US-Patente 5 227 346 und 5 413 972. Obwohl die Verwendung von Yttrium und/oder Seltenerd-Kationen die erforderlichen mehrphasigen SiAlON-Keramikwerkstoffe ergibt, sind die Mikrostruktur und in größerem Maße die körper- und/oder thermischen Eigenschaften nicht wie erhofft. Dies lässt sich durch die Umwandlung von α-SiAlON zu β-SiAlON erklären, wenn es bei Gebrauch zu einer Abreicherung der α-SiAlON-Phase kommt.

Aufgabe der vorliegenden Erfindung ist die Herstellung eines mehrphasigen SiAlON-Werkstoffs mit besseren Eigenschaften und stabiler Mikrostruktur bei hohen Temperaturen, der die Nachteile des Standes der Technik nicht aufweist.

Die erfindungsgemäße Aufgabe wird überraschenderweise durch einen hartstoffverstärkten SiAlON-Werkstoff mit drei Phasen gelöst. Diese Phasen sind die α- und β-SiAlONe und die intergranulär amorphe und/oder kristalline Korngrenzenphase(n). Die intergranuläre amorphe und/oder kristalline Phase enthält neben den Elementen Si, Al, O und N das Element Calcium, mindestens ein Element aus Yttrium und/oder ein Seltenerd-Element mit einer Atomzahl größer 62, und mindestens ein Seltenerd-Element mit einer Atomzahl gleich oder kleiner 62. Das α-SiAlON liegt entweder mit gleichachsiger oder länglicher Kornmorphologie vor, wohingegen die β-SiAlON-Phase nur in der länglichen Form vorkommt. Durch Einstellen der Phasenmengen zueinander können erfindungsgemäß überraschenderweise Werkstoffe bereitgestellt werden, die hohe Härte, Festigkeit und Zähigkeit bei Raumtemperatur und hoher Temperatur aufweisen. Als Hartstoffe werden SiC, Ti(C,N) oder Mischungen daraus zugesetzt.

Die Erfindung offenbart die Einführung von drei verschiedenen Kation-Typen in die α-SiAlON-Struktur. Calcium ist der größte α-SiAlON-Bildner und stabilisiert α-SiAlON, so dass es sich nach dem Sintern während des Abkühlens nicht in β-SiAlON umwandelt und die Menge an verbliebener Korngrenzenphase reduziert wird. Yttrium beziehungsweise Seltenerd-Elemente mit einer Atomzahl größer 62 stabilisieren auch das α-SiAlON und steigern so die Härte des fertigen Werkstoffs. Seltenerd-Elemente mit einer Atomzahl gleich oder kleiner 62 unterstützen die Bildung einer länglichen Kornmorphologie für β- und α-SiAlONe. Durch die Kombination der drei verschiedenen Kationtypen wird die amorphe und/oder kristalline Korngrenzenphase(n) nach dem Sintern erheblich reduziert.

Gegenstand der vorliegenden Erfindung ist ein hartstoffverstärkter, mehrphasiger SiAlON-Keramikwerkstoff, der ein Gemisch von drei Phasen und mindestens einen Hartstoff enthält. Diese Phasen umfassen α- und β-SiAlONe und intergranulär amorphe und/oder kristalline Korngrenzenphase(n). Die dritte intergranulär amorphe und/oder kristalline Phase enthält neben den Elementen Si, Al, O und N (i) das Element Calcium, (ii) mindestens ein Element aus Yttrium und/oder einem Seltenerd-Element mit einer Atomzahl größer 62 und (iii) mindestens ein Seltenerd-Element mit einer Atomzahl gleich oder kleiner als 62. Als Hartstoffe werden vorzugsweise SiC, Ti(C,N) oder Mischungen daraus eingesetzt.

Die α-SiAlON-Phase ist eine kristalline Phase, die je nach Ausgangs-Zusammensetzung als feine Körner mit gleichachsiger oder länglicher Kornmorphologie existiert. Mikrogramme wurden durch Rasterelektronenmikroskopie (SEM) aufgenommen, und chemische Analysen von α-SiAlONen erfolgten durch energiedispersive Röntgenanalyse (EDX). Die EDX-Analyseergebnisse zeigten drei verschiedene Kationentypen, die (i) Calcium, (ii) mindestens ein Element aus Yttrium und/oder einem Seltenerd-Element mit einer Atomzahl größer 62 und (iii) mindestens ein Seltenerd-Element mit einer Atomzahl gleich oder kleiner 62 umfassen.

Die zweite Phase des SiAlON-Keramikwerkstoffs ist ein β-SiAlON der allgemeinen Formel Si_{6-z}Al_{z}O_{z}N_{8-z}, in der erfindungsgemäß die Werte für z 0<z<1,6 anstelle von üblicherweise 0<z<4,2 sind. Durch SEM aufgenommene Mikrogramme zeigen eine längliche Kornmorphologie. Das Gewichtsprozent-Verhältnis von α- zu β-SiAlON ändert sich vorzugsweise von etwa 20:80 bis etwa 80:20.

Die dritte Phase des mehrphasigen SiAlON-Keramikwerkstoffs umfasst intergranuläre amorphe und/oder kristalline Phase(n) mit Si, Al, O, N in Kombination mit (i) Calcium, (ii) mindestens einem Element aus Yttrium und/oder einem Seltenerd-Element mit einer Atomzahl größer 62 und (iii) mindestens einem Seltenerd-Element mit einer Atomzahl gleich oder kleiner 62. Die intergranuläre amorphe und/oder kristalline Phase(n) liegen in einer Menge von maximal 16 Volumenprozent, bezogen auf das Gesamtvolumen des Werkstücks, vor.

Überraschenderweise wurde festgestellt, dass die oben beschriebenen, keinen Hartstoff enthaltenden, aber bereits einen hohen Verschleißwiderstand aufweisenden α-/β-SiAlONe erfindungsgemäß überraschenderweise durch den Zusatz von mindestens einem Hartstoff, insbesondere durch den Zusatz von SiC, Ti(C,N) oder Mischungen daraus, weiter verbessert werden können. Die Hartstoffe können zu einem hohen Prozentsatz zugesetzt werden, so dass erfindungsgemäß ausreichend dichte Werkstoffe hergestellt werden können. Derartige Werkstoffe mit deutlich gesteigerter Härte weisen einen nochmals verbesserten Verschleißwiderstand beim Zerspanen von Metallen aus und eignen sich hervorragend für die Anwendung als Schneidstoff.

Gegenstand der vorliegenden Erfindung ist weiterhin ein Verfahren zur Herstellung von mehrphasigen SiAlON-Keramikwerkstoffen.

Das Verfahren umfasst die Schritte:
(a) Herstellen eines Gemisches aus Si₃N₄, AIN, Al₂O₃, einer Verbindung aus der Gruppe der Oxide und Nitride des Calciums, mindestens einer Verbindung aus der Gruppe der Oxide und Nitride des Yttriums und/oder eines Seltenerd-Elements mit einer Atomzahl größer 62, mindestens einer Verbindung aus der Gruppe der Oxide und Nitride eines Seltenerd-Elements mit einer Atomzahl gleich oder kleiner 62 und mindestens einem Hartstoff aus der Reihe SiC, Ti(C,N) oder aus Mischungen daraus,
(b) Zerreibmahlen dieses Gemisches in Wasser oder in einem organischen Lösungsmittel, beispielsweise in einem Alkohol wie Ethanol,
(c) Trocknen des Gemisches,
(d) Pressen bei 150 MPa und
(e) mindestens 18-minütiges Sintern zwischen 1600 und 2000°C, vorzugsweise zwischen 1700 und 1850°C in einem Gasdruck-Sinterofen unter einem Druck zwischen 1 und 100 bar.

Aus dem Vorstehenden ergibt sich, dass die erfindungsgemäße Lehre mehrphasige SiAlON-Keramikwerkstoffe betrifft, wobei der jeweilige Werkstoff:
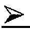 mindestens eine erste, eine zweite und eine dritte Phase und einen Hartstoff enthält, wobei die erste Phase ein α-SiAlON, die zweite Phase ein β-SiAlON und die dritte Phase intergranulär amorph und/oder kristallin ist und der Hartstoff ausgewählt ist aus SiC, Ti(C,N) oder aus Mischungen daraus, wobei dass die dritte intergranulär amorphe und/oder kristalline Phase neben den Elementen Si, Al, O und N,
   (i) das Element Calcium;
   (ii) mindestens ein Element aus Yttrium und/oder einem Seltenerd-Element mit einer Atomzahl größer 62;
   (iii) mindestens ein Seltenerd-Element mit einer Atomzahl gleich oder kleiner 62 enthält.

Bei dem jeweiligen Werkstoff ist dabei bevorzugt:
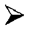 dass das α-SiAlON der allgemeinen Formel MxSi12-m-nAlm+nOnN16-n entspricht, wobei 0 < x ≤ 2 ist und M für ein Gemisch aus mehreren Kationen steht, ausgewählt aus
   (i) dem Element Calcium;
   (ii) mindestens einem Element aus der Reihe Yttrium und/oder einem Seltenerd-Element mit einer Atomzahl größer 62;
   (iii) mindestens einem Seltenerd-Element mit einer Atomzahl gleich oder kleiner 62;
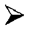 dass das β-SiAlON der allgemeinen Formel Si6-zAlzOzN8-z entspricht, wobei 0 < z ≤ 1,6 ist; 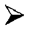
dass der Hartstoff gemäß d) in Mengen von 10 bis 40 Vol.%, bevorzugt in Mengen von 13 bis 30 Vol.%, besonders bevorzugt in Mengen von 15 bis 20 Vol.%, bezogen auf das Gesamtvolumen des Materials, enthalten ist;
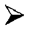 dass die intragranuläre Phase in einer Menge von maximal 16 Vol.%, bezogen auf das Gesamtvolumen des Materials, vorliegt; 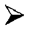
dass das Gewichtsverhältnis von α-SiAlON zu β-SiAlON von etwa 20 : 80 bis etwa 80 : 20 reicht;

Die erfindungsgemäße Lehre betrifft weiterhin ein Verfahren zur Herstellung eines erfindungsgemäßen SiAlON-Keramikwerkstoffs: 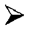
das die Schritte (a) bis (e) umfasst:
   (a) Herstellen eines Gemisches aus Si₃N₄, AIN, Al₂O₃, einer Verbindung aus der Gruppe der Oxide und Nitride des Calciums, mindestens einer Verbindung aus der Gruppe der Oxide und Nitride des Yttriums und/oder eines Seltenerd-Elements mit einer Atomzahl größer 62, mindestens einer Verbindung aus der Gruppe der Oxide und Nitride eines Seltenerd-Elements mit einer Atomzahl gleich oder kleiner 62 und mindestens einem Hartstoff aus der Reihe eines Karbids, Nitrids oder Silizids oder Mischungen daraus,
   (b) Zerreibmahlen dieses Gemisches in Wasser oder in einem organischen Lösungsmittel, beispielsweise in einem Alkohol wie Ethanol,
   (c) Trocknen des Gemisches,
   (d) Pressen bei 150 MPa und
   (e) mindestens 18-minütiges Sintern zwischen 1600 und 2000°C, vorzugsweise zwischen 1700 und 1850°C in einem Gasdruck-Sinterofen unter einem Druck zwischen 1 und 100 bar, wobei der Hartstoff ausgewählt ist aus der Reihe SiC, Ti(C,N) oder aus Mischungen daraus.

Bevorzugt ist ein Verfahren, bei dem: 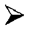
der Hartstoff in Mengen von 10 bis 40 Vol.%, bevorzugt in Mengen von 13 bis 30 Vol.%, besonders bevorzugt in Mengen von 15 bis 20 Vol.%, bezogen auf das Gesamtvolumen des Materials, zugegeben wird.

Die folgenden Beispiele dienen der Veranschaulichung der erfindungsgemäßen Lehre, ohne den Schutzbereich dieser Erfindung einzuschränken. Sämtliche Prozentangaben beziehen sich, wenn nicht anders angegeben, auf das Gewicht.

### BEISPIEL 1 (Hartstoff-frei)

| **Verbindung** | **Gewichtsprozent** |
|---|---|
| Si₃N₄ | 89,34 |
| AlN | 5,330 |
| Y₂O₃ | 4,800 |
| Sm₂O₃ | 0,412 |
| CaCO₃ | 0,118 |

Ein Gemisch der oben angegebenen fünf Komponenten wurde in den angegebenen Mengen durch Zerreibmahlen mit Si₃N₄-Medium in Wasser für 2 Std. gemischt, so dass ein Pulvergemisch erhalten wurde, das dann mit geeigneten Bindemitteln, Presszusätzen und Weichmachern versetzt wurde und durch einen Sprühtrockner getrocknet wurde. Die getrockneten Pulver wurden gesiebt und uniaxial mit einem Druck von 150 MPa gepresst. Die ungesinterten Presspellets wurden mit einem Fünfschritt-Zyklus für 2 Std. auf 1800°C in einem Gasdruck-Sinterofen bei einem Druck von bis zu 22 bar gesintert. Der Werkstoff war vollständig dicht mit einer Dichte von 3,26 g/cm³, gemessen durch Eintauchen in Wasser. Die Röntgenbeugung zeigte α- und β-SiAlONe. Es wurde ein α-β-Verhältnis von 50:50 erhalten.

### BEISPIEL 2 (Hartstoff-frei)

| **Verbindung** | **Gewichtsprozent** |
|---|---|
| Si₃N₄ | 89,22 |
| AlN | 5,32 |
| Y₂O₃ | 3,99 |
| Sm₂O₃ | 1,234 |
| CaCO₃ | 0,236 |

Ein Gemisch der oben angegebenen fünf Komponenten wurde wie in Beispiel 1 in den angegebenen Mengen durch Zerreibmahlen gemischt und durch Gasdruck-Sintern gesintert. Die Werkstoffdichte wurde bei 3,25 g/cm³ gemessen. Die Röntgenbeugung zeigte α- und β-SiAlONe. Es wurde ein α-β-Verhältnis von 50:50 erhalten.

### BEISPIEL 3 (Hartstoff-frei)

| **Verbindung** | **Gewichtsprozent** |
|---|---|
| Si₃N₄ | 72,52 |
| AlN | 13,61 |
| Al₂O₃ | 6,61 |
| Y₂O₃ | 2,74 |
| Sm₂O₃ | 2,43 |
| CaCO₃ | 2,09 |

Ein Gemisch der oben angegebenen sechs Komponenten wurde wie in Beispiel 1 in den angegebenen Mengen durch Zerreibmahlen gemischt und durch Gasdruck-Sintern gesintert. Die Werkstoffdichte wurde bei 3,25 g/cm³ gemessen. Die Röntgenbeugung zeigte α- und β-SiAlONe. Es wurde ein α-β-Verhältnis von 75:25 erhalten. Das Ausmaß der Korngrenzenphase ist in diesem Beispiel erheblich reduziert.

### BEISPIEL 4 (erfindungsgemäß)

In diesem Beispiel wird überraschenderweise der positive Effekt einer Hartstoffzugabe verdeutlicht. Die Mischung B entsteht aus der Mischung A unter Zugabe von 25 Massen% Siliziumkarbid (Tabelle 1). Die Aufbereitung der Masse wurde mittels Standardverfahren durchgeführt (Nassmahlung in Attritor bis zu einer Feinheit von D₅₀ ca. 1 µm; Binderzugabe; Sprühtrocknen; Pressen; Binderausbrand). Die Proben wurden unter folgenden Bedingungen gasdruckgesintert: Sintern bei 1990°C, 100 bar N₂, 2h.

Auch bei der Zusammensetzung mit hohem Hartstoffzusatz kann 100% der theoretischen Dichte erreicht werden (Tabelle 1). Das Phasenverhältnis von alphazu beta-SiAlON wird durch den Hartstoffzusatz nicht wesentlich beeinflusst. Es ergibt sich jedoch eine deutliche Härtesteigerung. Die Zähigkeit sinkt minimal, da die Hartstoffpartikel das Längenwachstum der beta-SiAlON-Körner behindern.

**Tabelle 1:**

| | A (Hartstoff-frei) | B | |
|---|---|---|---|
| Zusammensetzung in Masse-%: | | | Rohstoffe: |
| Si₃N₄ | 89,69 | 67,31 | UBE SNE10 |
| AlN | 4,69 | 3,52 | Tokuyama, Gr. H |
| Al₂O₃ | 0,49 | 0,37 | Baikowsky, RC-HP DBM |
| Y₂O₃ | 4,61 | 3,46 | HCST, Gr. C |
| Sm₂O₃ | 0,40 | 0,30 | Treibacher, 99,9% |
| CaCO₃ | 0,11 | 0,085 | Merck, z.A. |
| SiC | - | 25 | HCST, UF15 |
| | | | |
| Dichte / g/cm³ | 3,254 | 3,250 | |
| % theoret. Dichte | 100 | 100 | |
| Alpha:Beta | 24:76 | 23:77 | |
| HV10 /GPa | 15,4 | 19,2 | |
| K_{IC} /MPam^{0,5} | 6,4 | 5,2 | |

Zusammensetzung und Eigenschaften einer Mischung ohne bzw. mit 25% Hartstoffzusatz.

Die stark erhöhte Härte wirkt sich in einem verringertem Verschleiß bei der Zerspanung aus (s. Tabelle 2).

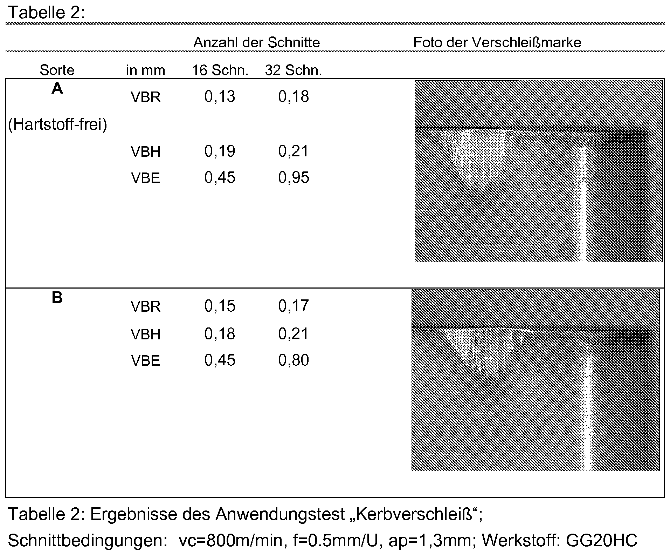

## Patentansprüche

1. Mehrphasiger SiAlON-Keramikwerkstoff, der mindestens eine erste, eine zweite und eine dritte Phase und einen Hartstoff enthält, wobei die erste Phase ein α-SiAlON, die zweite Phase ein β-SiAlON und die dritte Phase intergranulär amorph und/oder kristallin ist, **dadurch gekennzeichnet, dass** der Hartstoff ausgewählt ist aus Reihe SiC, Ti(C,N) oder aus Mischungen daraus, und dass die dritte intergranulär amorphe und/oder kristalline Phase neben den Elementen Si, Al, O und N,
(i) das Element Calcium;
(ii) mindestens ein Element aus Yttrium und/oder einem Seltenerd-Element mit einer Atomzahl größer 62 und
(iii) mindestens ein Seltenerd-Element mit einer Atomzahl gleich oder kleiner 62 enthält.

2. Mehrphasiger SiAlON-Keramikwerkstoff gemäß Anspruch 1, **dadurch gekennzeichnet, dass** das α-SiAlON der allgemeinen Formel MₓSi₁₂₋ₘ₋ₙAlₘ₊ₙOₙN₁₆₋ₙ entspricht, wobei 0 < x ≤ 2, m die Anzahl der SiN-Bindungen, die durch Al-N pro Einheitszelle ersetzt sind, n die Anzahl der SiN-Bindungen, die durch Al-O pro Einheitszelle ersetzt sind und M für ein Gemisch aus mehreren Kationen steht, ausgewählt aus
(i) dem Element Calcium;
(ii) mindestens einem Element aus Yttrium und/oder einem Seltenerd-Element mit einer Atomzahl größer 62 und
(iii) mindestens einem Seltenerd-Element mit einer Atomzahl gleich oder kleiner 62.

3. Mehrphasiger SiAlON-Keramikwerkstoff gemäß Anspruch 1 oder 2, **dadurch gekennzeichnet, dass** das β-SiAlON der allgemeinen Formel Si6-zAlzOzN8-z entspricht, wobei 0 < z ≤ 1,6 ist.

4. Mehrphasiger SiAlON-Keramikwerkstoff gemäß einem oder mehreren der Ansprüche 1 bis 3, **dadurch gekennzeichnet, dass** der Hartstoff in Mengen von 10 bis 40 Vol.%, bevorzugt in Mengen von 13 bis 30 Vol.%, besonders bevorzugt in Mengen von 15 bis 20 Vol.%, bezogen auf das Gesamtvolumen des Materials, enthalten ist.

5. Mehrphasiger SiAlON-Keramikwerkstoff gemäß einem oder mehreren der Ansprüche 1 bis 4, **dadurch gekennzeichnet, dass** die intragranuläre Phase in einer Menge von maximal 16 Vol.%, bezogen auf das Gesamtvolumen des Materials, vorliegt.

6. Mehrphasiger SiAlON-Keramikwerkstoff gemäß einem oder mehreren der Ansprüche 1 bis 5, **dadurch gekennzeichnet, dass** das Gewichtsverhältnis von α-SiAlON zu β-SiAlON von etwa 20 : 80 bis etwa 80 : 20 reicht.

7. Verfahren zur Herstellung eines SiAlON-Keramikwerkstoffs gemäß einem oder mehreren der Ansprüche 1 bis 6, **dadurch gekennzeichnet, dass** es die Schritte (a) bis (e) umfasst:
(a) Herstellen eines Gemisches aus Si₃N₄, AIN, Al₂O₃, einer Verbindung aus der Gruppe der Oxide und Nitride des Calciums, mindestens einer Verbindung aus der Gruppe der Oxide und Nitride des Yttriums und/oder eines Seltenerd-Elements mit einer Atomzahl größer 62, mindestens einer Verbindung aus der Gruppe der Oxide und Nitride eines Seltenerd-Elements mit einer Atomzahl gleich oder kleiner 62 und mindestens einem Hartstoff aus der Reihe eines Karbids, Nitrids oder Silizids oder Mischungen daraus,
(b) Zerreibmahlen dieses Gemisches in Wasser oder in einem organischen Lösungsmittel, beispielsweise in einem Alkohol wie Ethanol,
(c) Trocknen des Gemisches,
(d) Pressen bei 150 MPa und
(e) mindestens 18-minütiges Sintern zwischen 1600 und 2000°C, vorzugsweise zwischen 1700 und 1850°C in einem Gasdruck-Sinterofen unter einem Druck zwischen 1 und 100 bar,
wobei der Hartstoff ausgewählt ist aus der Reihe SiC, Ti(C,N) oder aus Mischungen daraus.

8. Verfahren gemäß Anspruch 7, **dadurch gekennzeichnet, dass** der Hartstoff in Mengen von 10 bis 40 Vol.%, bevorzugt in Mengen von 13 bis 30 Vol.%, besonders bevorzugt in Mengen von 15 bis 20 Vol.%, bezogen auf das Gesamtvolumen des Materials, zugegeben wird.

## Claims

1. A multiphase SiAlON ceramic material that contains at least one first, one second and one third phase and a hard substance, wherein the first phase is an α-SiAlON, the second phase is a β-SiAlON, and the third phase is intergranularly amorphous and/or crystalline, **characterised in that** the hard substance is selected from the series SiC, Ti(C,N) or from mixtures thereof, and the third intergranularly amorphous and/or crystalline phase contains, in addition to the elements Si, Al, O and N,
(i) the element calcium;
(ii) at least one element from yttrium and/or a rare-earth element having an atomic number greater than 62, and
(iii) at least one rare-earth element having an atomic number equal to or smaller than 62.

2. A multiphase SiAlON ceramic material according to claim 1, **characterised in that** the α-SiAlON corresponds to the general formula MₓSi₁₂₋ₘ₋ₙAlₘ₊ₙOₙN₁₆₋ₙ, where 0 < x ≤ 2, m is the number of SiN-bonds that are replaced by Al-N per unit cell, n is the number of SiN-bonds that are replaced by Al-O per unit cell, and M stands for a mixture of a plurality of cations, selected from
(i) the element calcium;
(ii) at least one element from yttrium and/or a rare-earth element having an atomic number greater than 62, and
(iii) at least one rare-earth element having an atomic number equal to or smaller than 62.

3. A multiphase SiAlON ceramic material according to claim 1 or 2, **characterised in that** the β-SiAlON corresponds to the general formula Si6-zAlzOzN8-z, where 0 < z ≤ 1.6.

4. A multiphase SiAlON ceramic material according to one or more of claims 1 to 3, **characterised in that** the hard substance is contained in quantities of 10 to 40 % by volume, preferably in quantities of 13 to 30 % by volume, particularly preferably in quantities of 15 to 20 % by volume, relative to the total volume of the material.

5. A multiphase SiAlON ceramic material according to one or more of claims 1 to 4, **characterised in that** the intergranular phase is present in a quantity of maximally 16 % by volume, relative to the total volume of the material.

6. A multiphase SiAlON ceramic material according to one or more of claims 1 to 5, **characterised in that** the weight ratio of α-SiAlON to β-SiAlON ranges from approximately 20 : 80 to approximately 80 : 20.

7. A method for producing a SiAlON ceramic material according to one or more of claims 1 to 6, **characterised in that** it comprises the steps (a) to (e) :
(a) production of a mixture of Si₃N₄, AlN, Al₂O₃, a compound from the group of oxides and nitrides of calcium, at least one compound from the group of oxides and nitrides of yttrium and/or a rare-earth element having an atomic number greater than 62, at least one compound from the group of oxides and nitrides of a rare-earth element having an atomic number equal to or smaller than 62 and at least one hard substance from the series of carbide, nitride or silicide or mixtures thereof,
(b) trituration-grinding of this mixture in water or in an organic solvent, for example in an alcohol, such as ethanol,
(c) drying of the mixture,
(d) pressing at 150 MPa, and
(e) at least 18-minute sintering between 1600 and 2000°C, preferably between 1700 and 1850°C, in a gas-pressure sintering furnace at a pressure between 1 and 100 bar,
wherein the hard substance is selected from the series SiC, Ti(C,N) or from mixtures thereof.

8. A method according to claim 7, **characterised in that** the hard substance is added in quantities of 10 to 40 % by volume, preferably in quantities of 13 to 30 % by volume, particularly preferably in quantities of 15 to 20 % by volume, relative to the total volume of the material.

## Revendications

1. Matériau céramique polyphasique à base de SiAlON, qui comprend au moins une première phase, une deuxième phase et une troisième phase, ainsi qu'une matière dure, dans lequel la première phase est un α-SiAlON, la deuxième phase est un β-SiAlON et la troisième phase est intergranulaire et amorphe et/ou cristalline, **caractérisé en ce que** la matière dure est choisie dans l'ensemble formé par les corps de formules SiC et Ti(C, N) et leurs mélanges, et **en ce que** la troisième phase intergranulaire amorphe et/ou cristalline contient, en plus des éléments Si, Al, O et N,
i) de l'élément calcium,
ii) au moins un élément choisi parmi l'yttrium et/ou un élément des terres rares dont le numéro atomique est supérieur à 62,
iii) et au moins un élément des terres rares dont le numéro atomique est inférieur ou égal à 62.

2. Matériau céramique polyphasique à base de SiAlON, conforme à la revendication 1, **caractérisé en ce que** l'α-SiAlON correspond à la formule générale MₓSi₁₂₋ₘ₋ₙAlₘ₊ₙOₙN₁₆₋ₙ où l'indice x est défini par la double inégalité 0 < x ≤ 2, l'indice m est le nombre par maille unitaire de liaisons Si-N remplacées par des liaisons Al-N, l'indice n est le nombre par maille unitaire de liaisons Si-N remplacées par des liaisons Al-O, et M représente un mélange de plusieurs cations choisis parmi ceux des éléments suivants :
i) l'élément calcium,
ii) au moins un élément choisi parmi l'yttrium et/ou un élément des terres rares dont le numéro atomique est supérieur à 62,
iii) et au moins un élément des terres rares dont le numéro atomique est inférieur ou égal à 62.

3. Matériau céramique polyphasique à base de SiAlON, conforme à la revendication 1 ou 2, **caractérisé en ce que** le β-SiAlON correspond à la formule générale Si_{6-z}Al_{z}O_{z}N_{8-z} où l'indice z est défini par la double inégalité 0 < z ≤ 1,6.

4. Matériau céramique polyphasique à base de SiAlON, conforme à l'une ou plusieurs des revendications 1 à 3, **caractérisé en ce que** la matière dure s'y trouve contenue en une proportion de 10 à 40 % en volume, de préférence en une proportion de 13 à 30 % en volume, et mieux encore en une proportion de 15 à 20 % en volume, par rapport au volume total du matériau.

5. Matériau céramique polyphasique à base de SiAlON, conforme à l'une ou plusieurs des revendications 1 à 4, **caractérisé en ce que** la phase intragranulaire s'y trouve présente en une proportion d'au plus 16 %, en volume rapporté au volume total du matériau.

6. Matériau céramique polyphasique à base de SiAlON, conforme à l'une ou plusieurs des revendications 1 à 5, **caractérisé en ce que** le rapport pondéral de l'α-SiAlON au β-SiAlON vaut d'environ 20/80 à environ 80/20.

7. Procédé de préparation d'un matériau céramique à base de SiAlON, conforme à l'une ou plusieurs des revendications 1 à 6, **caractérisé en ce qu'**il comporte les étapes suivantes :
a) préparer un mélange de nitrure de silicium Si₃N₄, de nitrure d'aluminium AIN, d'alumine Al₂O₃, d'au moins un composé du groupe des oxyde et nitrure de calcium, d'au moins un composé du groupe des oxydes et nitrures de l'yttrium et/ou d'un élément des terres rares dont le numéro atomique est supérieur à 62, d'au moins un composé du groupe des oxydes et nitrures de l'yttrium et/ou d'un élément des terres rares dont le numéro atomique est inférieur ou égal à 62, et d'au moins une matière dure du groupe des carbures, nitrures et siliciures et leurs mélanges,
b) moudre ce mélange dans de l'eau ou dans un solvant organique, par exemple dans un alcool comme de l'éthanol,
c) faire sécher le mélange,
d) le comprimer sous 150 MPa,
e) et le fritter au moins 18 minutes entre 1600 et 2000 °C, de préférence entre 1700 et 1850 °C, dans un four de frittage sous pression de gaz, sous une pression de 1 à 100 bars,
et dans lequel la matière dure est choisie dans l'ensemble formé par les corps de formules SiC et Ti(C, N) et leurs mélanges.

8. Procédé conforme à la revendication 7, **caractérisé en ce que** l'on introduit la matière dure en une proportion de 10 à 40 % en volume, de préférence en une proportion de 13 à 30 % en volume, et mieux encore en une proportion de 15 à 20 % en volume, par rapport au volume total du matériau.
